# EUROPEAN PATENT SPECIFICATION

(11) **EP 4 230 297 B1**
(45) Date of publication and mention of the grant of the patent: **13.03.2024**
(21) Application number: 23151001.7
(22) Date of filing: 10.01.2023
(51) Int. Cl.: B02C 17/16, B02C 17/18, B07B 1/54

(54) **NANO-SAND MILL WITH STATIC DISCHARGE AT TAIL END OF TURBINE**
NANOSANDMÜHLE MIT STATISCHER ENTLADUNG AM HINTEREN ENDE DES ROTORS
NANO-SANDBROYEUR À DÉCHARGE STATIQUE À L'EXTRÉMITÉ ARRIÈRE DU ROTOR

(30) Priority: 16.02.2022 CN 202210143202
(43) Date of publication of application: 23.08.2023
(73) Proprietor: Guangdong Huahui Intelligent Equipment Co., Ltd., Dongguan City, Guangdong Province (CN)
(72) Inventor: ZHANG, Siyuan, Dongguan (CN)
(74) Representative: Bayramoglu et al.

(56) References cited:
- CN-A- 104 923 361
- CN-A- 113 798 003
- CN-B- 109 127 013
- CN-U- 213 434 827

## Description

### TECHNICAL FIELD

The present application relates to the technical field of sand grinding equipment, in particular to a nano-sand mill with static discharge at the tail end of a turbine.

### BACKGROUND

Sand mill, also known as bead mill, is mainly used for wet grinding of chemical liquid products. It can be roughly divided into horizontal sand mill, basket sand mill, vertical sand mill, etc. It is composed of a main body, a grinding drum, a sand grinding disc, a grinding medium, a motor, and a feeding pump. The feeding speed is controlled by the feeding pump. The grinding medium of this equipment is generally divided into zirconia beads, glass beads, zirconium silicate beads, etc.

The granted application patent with the publication number CN109225488B discloses a sand mill. The sand mill is provided with at least two movable filter discs, so the at least two movable filter discs can be used alternately. When one of the movable filter discs is blocked, other movable filter discs can be used, and the blocked movable filter disc is moved to a cleaning chamber for cleaning. However, this sand mill needs to be stopped when it is required to replace the filter disc. During the process of replacing the filter disc, the materials cannot be unloaded through the filter disc. Moreover, the replacement timing of the filter disc cannot be determined by the actual use state of the filter disc, and only regular replacement can be performed, resulting in that the blocked filter disc cannot be monitored in real time. The feed efficiency is further reduced. CN213434827U discloses a sand mill with a screen which is cleaned by pivoting hammers.

In view of the above technical problems, the present application proposes a solution.

### SUMMARY OF THE INVENTION

An objective of the present application is to solve the problem of low unloading efficiency caused by the need to stop the existing sand mill to replace the filter disc and the inability to monitor the blockage of the filter disc in real time during discharging, and propose a type of nano-sand mill with static discharge at the tail end of a turbine.

The objective of the present application can be achieved by the following technical solutions. A type of nano-sand mill with static discharge at the tail end of a turbine, including a main body and a screen box, wherein the screen box is fixedly installed at a bottom of the main body, a top surface of the screen box is provided with a through hole, the screen box is communicated with a discharge chamber of the main body through the through hole, an annular mounting plate is fixedly installed on an inner side surface of the screen box, a screen is fixedly installed between inner side surfaces of the annular mounting plate, and a striking mechanism is provided inside the annular mounting plate; and
the striking mechanism includes a striking box, a side surface of the striking box is fixedly connected with a connecting frame, two symmetrical rotating shafts are movably connected between a front inner wall and a back inner wall of the striking box, a rotating roller is fixedly installed on an outer surface of the rotating shaft, evenly distributed installation sleeves are fixedly installed on an outer surface of the rotating roller, evenly distributed bumps are fixedly installed on an outer surface of the installation sleeve, a drive box for driving the two rotating shafts is fixedly installed on a front surface of the striking box, two sets of symmetrical limit sleeves penetrate and are fixedly connected with an inner top wall of the striking box, a protruding rod is movably connected between inner rings of the limit sleeve, a connecting block is fixedly installed on a bottom of the protruding rod, a bottom of the connecting block is in contact with a top surface of the bump, a second spring is fixedly installed between a top surface of the connecting block and the inner top wall of the striking box, and a striking marble is fixedly installed on a top of the protruding rod.

As a preferred embodiment of the present application, a discharge pipe is fixedly installed on the screen box, a bottom of the screen box is communicated with a top of the discharge pipe, the discharge pipe is arranged horizontally, one end of the discharge pipe is sealed, a material pump is arranged between inner walls of the other end of the discharge pipe, an inner bottom wall of the discharge pipe is hinged with an unloading inclined plate, and a first spring is fixedly installed between a bottom surface of the unloading inclined plate and the inner bottom wall of the discharge pipe.

As a preferred embodiment of the present application, front ends of the two rotating shafts both pass through the inner wall of the striking box and extend to the interior of the drive box, a transmission gear is fixedly installed on outer surfaces of ends of the two rotating shafts located inside the drive box, the two transmission gears are engaged with each other, a micromotor is fixedly installed on a front inner wall of the drive box through two motor seats, and an output end of the micromotor is fixedly connected to the front end of one of the rotating shafts.

As a preferred embodiment of the present application, a processor is also provided on an outer grinding cylinder, and the processor is communicatively connected with a discharge monitoring module, an abnormality analysis module, a storage module, a controller, and a striking monitoring module;
the discharge monitoring module is intended to monitor and analyze a discharge speed of the main body: an angle value of an included angle between the unloading inclined plate and the inner bottom wall of the discharge pipe is obtained through an angle sensor and marked as an included angle value JD, included angle thresholds JDmin and JDmax are obtained through the storage module, where JDmin is the minimum included angle threshold and JDmax is the maximum included angle threshold, and the included angle value JD is compared with the included angle thresholds JDmin and JDmax: if JD≤JDmin, it is determined that the discharge is abnormal, and the discharge monitoring module sends a primary abnormality signal to the abnormality analysis module; if JDmin<JD<JDmax, it is determined that the discharge is normal, and the discharge monitoring module sends a normal discharge signal to the processor; and if JD ≥JDmax, it is determined that the discharge is abnormal, and the discharge monitoring module sends a secondary abnormality signal to the abnormality analysis module.

As a preferred embodiment of the present application, upon receiving the primary abnormality signal, the abnormality analysis module generates a maintenance signal and sends the maintenance signal to the processor, upon receiving the maintenance signal, the processor sends the maintenance signal to a mobile phone terminal of an administrator, and upon receiving the maintenance signal, the administrator checks the screen and the unloading inclined plate for faults respectively; and
upon receiving the secondary abnormality signal, the abnormality analysis module detects and analyzes blockage of the screen, and sends a striking signal to the processor when the screen is blocked, upon receiving the striking signal, the processor sends the striking signal to the controller, and upon receiving the striking signal, the controller controls the micromotor to start.

As a preferred embodiment of the present application, a specific process of detecting and analyzing the blockage of the screen includes: a pressure value of an inner wall of the discharge chamber is obtained through a pressure sensor disposed on the inner wall of the discharge chamber and marked as YL, a speed value of a spindle is obtained through a speed sensor and marked as ZS, and a discharge coefficient CL is obtained by calculating YL and ZS; and a discharge threshold CLmin is obtained through the storage module, and the discharge coefficient CL is compared with the discharge threshold CLmin: if the discharge coefficient CL is less than or equal to the discharge threshold CLmin, it is determined that the screen is not blocked, and the abnormality analysis module sends a normal discharge signal to the processor; and if the discharge coefficient CL is greater than the discharge threshold CLmin, it is determined that the screen is blocked.

As a preferred embodiment of the present application, the striking monitoring module is intended to monitor and analyze a striking efficiency of the striking mechanism: timekeeping is performed after the micromotor is started, a time when the micromotor is started is marked as a start time, a time when the included angle value JD is reduced to the included angle threshold JDmax is marked as an end time, the start time is subtracted from the end time to obtain a striking duration, a difference value between the included angle value JD and the angle threshold JDmax is marked as an angle difference value, a ratio of the angle difference value and the striking duration is marked as a striking efficiency, a striking threshold is obtained through the storage module, and the striking efficiency is compared with the striking threshold: if the striking efficiency is less than or equal to the striking threshold, it is determined that the striking efficiency is unqualified, and the striking monitoring module sends a striking abnormality signal to the processor; and if the striking efficiency is greater than the striking threshold, it is determined that the striking efficiency is qualified, and the striking monitoring module sends a normal striking signal to the processor.

Compared with the prior art, the present application has the following beneficial effects.
1. Through the striking mechanism, a plurality of striking marbles can continuously strike the screen to quickly strike the screen, shaking out the materials blocked on the screen, and at the same time, the surfaces of the striking marbles grind the materials on the lower surface of the screen. The unblocked part of the screen can perform unloading normally during the striking process. No shutdown in required in the striking process, thus ensuring the unloading continuity of the equipment and further improving the unloading efficiency.
2. Real-time monitoring of the unloading speed of the screen is realized through the discharge monitoring module, feedback of the unloading speed is realized through the inclination angle of the unloading inclined plate, and the state of the screen is analyzed with different analysis methods respectively when the unloading speed is too fast and the unloading speed is too slow, in order to prevent the phenomenon that the screen is damaged and the unloading speed is too fast and the screen cannot screen the materials. At the same time, the blockage of the screen can be monitored in real time. The screen is struck at the first time when it is blocked, thereby further improving the unloading efficiency.
3. Through the striking monitoring module, the striking efficiency of the striking mechanism can be detected and analyzed. When the striking efficiency is unqualified, the screen and the striking mechanism can be repaired in time to prevent the striking efficiency from being reduced due to the failure of the striking mechanism. The operating state of the striking mechanism is monitored, and the striking efficiency of the striking mechanism and the unloading efficiency of the screen are improved.

### BRIEF DESCRIPTION OF THE DRAWINGS

In order to facilitate understanding by those skilled in the art, the present application will be further described below with reference to the accompanying drawings.
FIG. 1 is a front view of the structure of Embodiment 1 of the present application;
FIG. 2 is a front cross-sectional view of the structure of a main body in Embodiment 1 of the present application;
FIG. 3 is a front cross-sectional view of the structure of a screen box in Embodiment 1 of the present application;
FIG. 4 is a front cross-sectional view of the structure of a striking box in Embodiment 1 of the present application;
FIG. 5 is a front cross-sectional view of the structure of a drive box in Embodiment 1 of the present application;
FIG. 6 is a left cross-sectional view of the structure of a striking mechanism in Embodiment 1 of the present application;
FIG. 7 is a schematic block diagram of Embodiment 2 of the present application; and
FIG. 8 is a flowchart of a method according to Embodiment 3 of the present application.

In the figures: 1. main body; 2. screen box; 3. striking mechanism; 301, striking box; 302, drive box; 303, rotating shaft; 304, rotating roller; 305, installation sleeve; 306, bump; 307, transmission gear; 308, micromotor; 309, limit sleeve; 310, protruding rod; 311, connecting block; 312, second spring; 313, striking marble; 4, outer grinding cylinder; 5, drive motor; 6, spindle; 7. feeding pipe; 8. annular fixing seat; 9. inner grinding cylinder; 10. grinding nail; 11. grinding roller; 12. rod pin; 13. discharge chamber; 14. through hole; 15. annular installation plate; 16, screen; 17, discharge pipe; 18, unloading inclined plate; 19, first spring.

### DETAILED DESCRIPTION OF THE EMBODIMENTS

The technical solutions of the present application will be clearly and completely described below with reference to the embodiments. Obviously, the described embodiments are only a part of the embodiments of the present application, rather than all the embodiments. Based on the embodiments of the present application, all other embodiments obtained by those of ordinary skill in the art without creative efforts shall fall within the protection scope of the present application.

### Embodiment 1

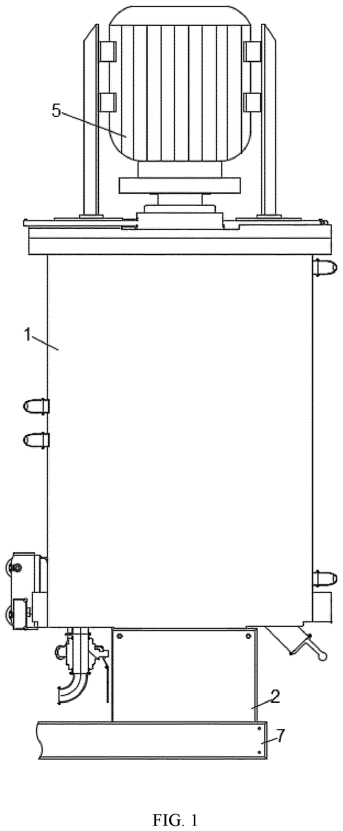

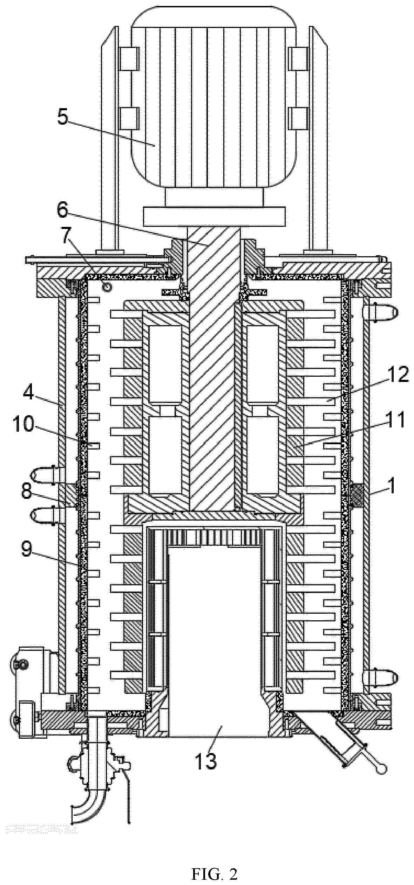

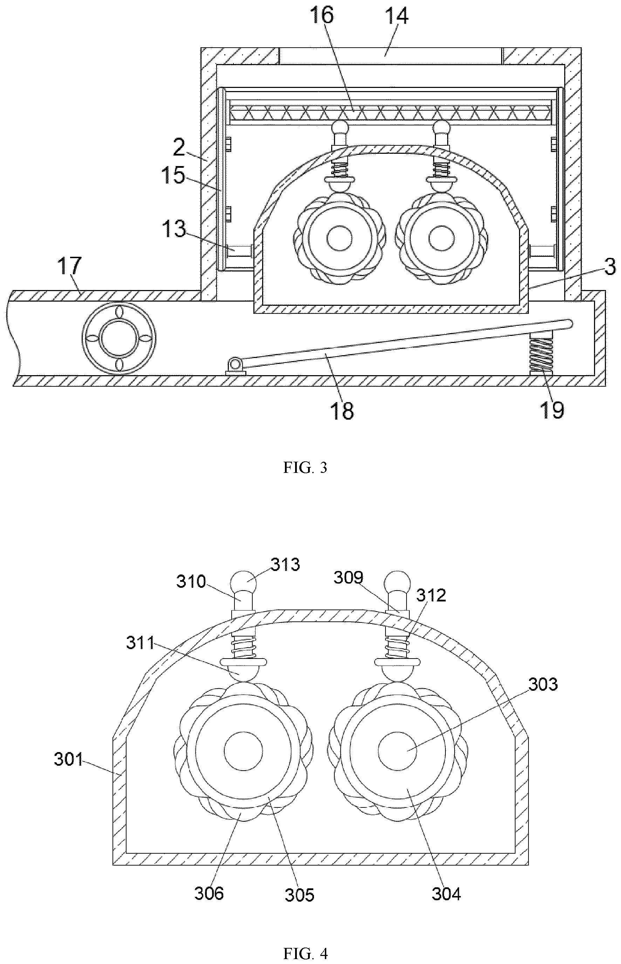

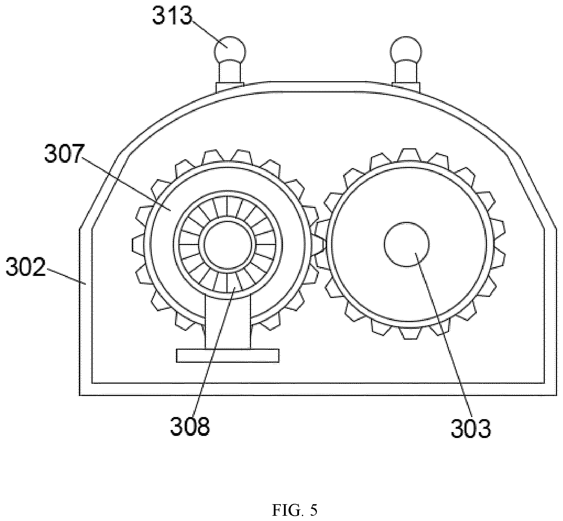

Referring to FIGS. 1-6, a type of nano-sand mill with static discharge at the tail end of a turbine includes a main body 1 and a screen box 2. The main body 1 includes an outer grinding cylinder 4. A drive motor 5 is fixedly installed on a top of the outer grinding cylinder 4 through two motor seats. A spindle 6 is fixedly installed at an output end of the drive motor 5. A bottom of the spindle 6 passes through an inner wall of the outer grinding cylinder 4 and extends to the interior of the outer grinding cylinder 4. The inner wall of the outer grinding cylinder 4 is fixedly connected with a feed pipe 7. An annular fixing seat 8 is disposed between inner side walls of the outer grinding cylinder 4. An inner grinding cylinder 9 is fixedly installed between inner rings of the annular fixing seat 8. Evenly distributed grinding nails 10 are disposed on an inner wall of the inner grinding cylinder 9. A new type of cylinder with convex grinding nails 10 increases the strength and service time of the cylinder, makes materials strike the grinding cylinder in a larger area under the condition of high-speed centrifugal motion, and improves the dispersion effect. A grinding roller 11 is fixedly installed on an outer surface of an end of the spindle 6 located inside the inner grinding cylinder 9. Evenly distributed rod pins 12 are fixedly installed on an outer surface of the grinding roller 11. The rod pins 12 are made of high wear-resistant and high-strength ceramic materials, with a long service life. The rod pins 12 are arranged crosswise with the grinding roller 11. A discharge chamber 13 is provided inside the outer grinding cylinder 4.

The screen box 2 is fixedly installed at a bottom of the main body 1. A top surface of the screen box 2 is provided with a through hole 14. The screen box 2 and the discharge chamber 13 of the main body 1 are communicated through the through hole 14. Materials in the discharge chamber 13 directly enter the screen box 2 through the through hole 14. An annular mounting plate 15 is fixedly installed on an inner side surface of the screen box 2. The annular mounting plate 15 is intended to fix the screen 16 and a striking mechanism 3. The screen 16 is fixedly installed between inner side surfaces of the annular mounting plate 15. Evenly distributed connecting frames are fixedly installed on an inner side surface of the annular mounting plate 15. The striking mechanism 3 is fixed between ends of the evenly distributed connecting frames away from the annular mounting plate 15. The striking mechanism 3 is intended to strike the screen 16. A discharge pipe 17 is fixedly installed on the screen box 2. A bottom of the screen box 2 is communicated with a top of the discharge pipe 17. The discharge pipe 17 is arranged horizontally. One end of the discharge pipe 17 is sealed. A material pump is arranged between inner walls of the other end of the discharge pipe 17. An unloading inclined plate 18 is hinged with an inner bottom wall of the discharge pipe 17. The unloading speed is fed back through an inclination angle of the unloading inclined plate 18, such that when the speed is too fast or too slow, an early warning and abnormality analysis are performed in time. A first spring 19 is fixedly installed between a bottom surface of the unloading inclined plate 18 and the inner bottom wall of the discharge pipe 17. The first spring 19 is intended to provide an elastic support for the unloading inclined plate 18.

The striking mechanism 3 includes a striking box 301. A side surface of the striking box 301 is fixedly connected with the connecting frame. Two symmetrical rotating shafts 303 are movably connected between a front inner wall and a back inner wall of the striking box 301. A rotating roller 304 is fixedly installed on an outer surface of the rotating shaft 303. Evenly distributed installation sleeves 305 are fixedly installed on an outer surface of the rotating roller 304. The number of the installation sleeves 305 is not less than three. The installation sleeves 305 correspond to limit sleeves 309 one-to-one. That is, several limit sleeves 309 are respectively installed directly above several installation sleeves 305. Evenly distributed bumps 306 are fixedly installed on an outer surface of the installation sleeve 305. A drive box 302 is fixedly installed on a front surface of the striking box 301. Front ends of the two rotating shafts 303 pass through the inner wall of the striking box 301 and extends to the interior of the drive box 302. A transmission gear 307 is fixedly installed on outer surfaces of ends of the two rotating shafts 303 located inside the drive box 302. The two transmission gears 307 are engaged with each other. A micromotor 308 is fixedly installed on a front inner wall of the drive box 302 through two motor seats. The micromotor 308 and the two transmission gears 307 drive the two rotating shafts 303 to rotate synchronously and in opposite directions. While the rotating shaft 304 is rotating, the plurality of bumps 306 on the outer surface of the installation sleeve 305 make a protruding rod 310 reciprocate in a vertical direction, so as to strike the screen 16 by continuously striking the screen 16 with a striking marble 313. Moreover, a plurality of striking marbles 313 contact with the screen 16 at a different time, thereby further speeding up the frequency of the screen 16 being struck, such that the efficiency of striking the screen 16 is further improved. An output end of the micromotor 308 is fixedly connected with the front end of one of the rotating shafts 303. Two sets of symmetrical limit sleeves 309 penetrate and are fixedly connected with an inner top wall of the striking box 301. The limit sleeves 309 are in one-to-one correspondence with the installation sleeves 305. The protruding rod 310 is movably connected between inner rings of the limit sleeve 309. A connecting block 311 is fixedly installed at a bottom of the protruding rod 310. A bottom of the connecting block 311 is in contact with a top surface of the bump 306. A second spring 312 is fixedly installed between a top surface of the connecting block 311 and the inner top wall of the striking box 301. The second spring 312 is sleeved on an outer surface of the protruding rod 310. A gap exists between an inner ring of the second spring 312 and the outer surface of the protruding rod 310. The striking marble 313 is fixedly installed on a top of the protruding rod 310. Several striking marbles 313 are located on the same set of limit sleeves 309 at difference heights. Through the design of different heights at the initial position, the plurality of striking marbles 313 strike the screen 16 at a different time, the frequency of the screen 16 being struck is accelerated, and the striking efficiency is greatly improved.

### Embodiment 2

In the above embodiment, the screen 16 can be struck during the unloading process by the striking marbles 313 striking the screen 16, which speeds up the striking efficiency of the screen 16, but the blockage of the screen 16 cannot be monitored. Therefore, the timing of striking cannot be automatically selected according to the blockage of the screen 16, and striking cannot be performed at the first time when the screen 16 is blocked.

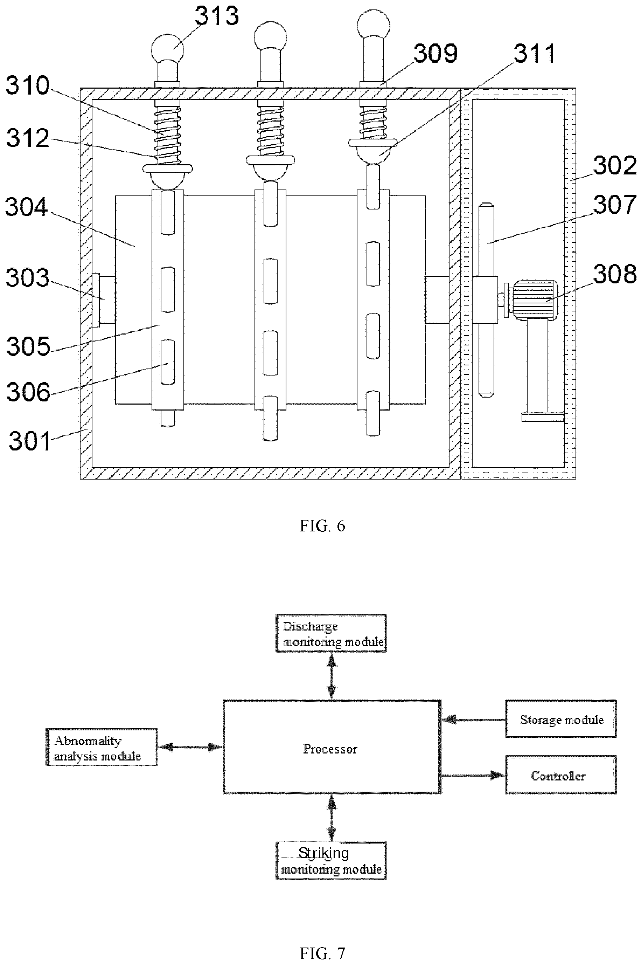

Referring to FIG. 7, the outer grinding cylinder 4 is also provided with a processor. The processor is communicatively connected with a discharge monitoring module, an abnormality analysis module, a storage module, a controller, and a striking monitoring module.

The discharge monitoring module is intended to monitor and analyze a discharge speed of the main body 1. An angle value of an included angle between the unloading inclined plate 18 and the inner bottom wall of the discharge pipe 17 is obtained through an angle sensor and marked as an angle value JD. Included angle thresholds JDmin and JDmax are obtained through the storage module, where JDmin is the minimum included angle threshold, and JDmax is the maximum included angle threshold. The included angle value JD is compared with the included angle thresholds JDmin and JDmax. If JD≤JDmin, it means that the unloading speed is too fast, and the screen 16 may be damaged in this case. Once the screen 16 is damaged, materials will be discharged directly without being screened, and therefore, the grinding effect of the discharged materials cannot be guaranteed. It is determined that the discharge is abnormal, and the discharge monitoring module sends a primary abnormality signal to the abnormal analysis module. If JDmin<JD<JDmax, it is determined that the discharge is normal, and the discharge monitoring module sends a normal discharge signal to the processor. If JD≥ JDmax, it means that the unloading speed is too slow, and it is very likely that the screen 16 is blocked in this case. Therefore, it is necessary to analyze the reason for the slow unloading speed through the abnormality analysis module. It is determined that the discharge is abnormal, and the discharge monitoring module sends a secondary abnormality signal to the abnormality analysis module.

Upon receiving the primary abnormality signal, the abnormality analysis module generates a maintenance signal and sends the maintenance signal to the processor. Upon receiving the maintenance signal, the processor sends the maintenance signal to a mobile phone terminal of an administrator. Upon receiving the maintenance signal, the administrator checks the screen 16 and the unloading inclined plate 18 for faults respectively. The fault check here is mainly carried out on whether the screen 16 is damaged and whether the first spring 19 can be normally extended and retracted.

Upon receiving the secondary abnormality signal, the abnormality analysis module detects and analyzes the blockage of the screen 16. A pressure value of an inner wall of the discharge chamber 13 is obtained through a pressure sensor arranged on the inner wall of the discharge chamber 13 and marked as YL. A speed value of the spindle 6 is obtained through a rotational speed sensor and marked as ZS. A discharge coefficient CL is obtained by a formula CL=α1×YL+α2+×ZS. The discharge coefficient CL is a value that reflects the possibility that the discharge speed being too slow is caused by reasons other than the blockage of the screen 16. The higher the value of the discharge coefficient CL, the lower the possibility that the discharge speed being too slow is caused by reasons other than the blockage of the screen 16. The lower the value of the discharge coefficient CL, the lower the possibility that the discharge speed being too slow is caused by the blockage of the screen 16. α1 and α2 are proportional coefficients, α1>α2>1. A discharge threshold CLmin is obtained through the storage module, and the discharge coefficient CL is compared with the discharge threshold CLmin. If the discharge coefficient CL is less than or equal to the discharge threshold CLmin, it is determined that the screen 16 is not blocked, and the abnormality analysis module sends a normal discharge signal to the processor. If the discharge coefficient CL is greater than the discharge threshold CLmin, it is determined that the screen 16 is blocked, and the abnormality analysis module sends a striking signal to the processor. Upon receiving the striking signal, the processor sends the striking signal to the controller. Upon receiving the striking signal, the controller controls the micromotor 308 to start, such that the plurality of striking marbles 313 continuously strike the screen 16 to strike the screen 16 quickly, shaking out the materials blocked on the screen 16, and at the same time the surfaces of the striking marbles 313 grind the materials blocked on the lower surface of the screen 16.

The striking monitoring module is intended to monitor and analyze a striking efficiency of the striking mechanism 3. Tim-keeping is performed after the micromotor 308 is started. A time when the micromotor 308 is started is marked as a start time. A time when the included angle value JD is reduced to the included angle threshold JDmax is marked as an end time. The start time is subtracted from the end time to obtain a striking duration. A difference value between the included angle value JD and the angle threshold JDmax is marked as an angle difference value. A ratio of the angle difference value to the striking duration is marked as a striking efficiency. The striking efficiency is a value that reflects the working efficiency of the striking mechanism 3. The higher the value of the striking efficiency, the higher the working efficiency of the striking mechanism 3. The striking threshold is obtained through the storage module, and the striking efficiency is compared with the striking threshold. If the striking efficiency is less than or equal to the striking threshold, it is determined that the striking efficiency is unqualified, and the striking monitoring module sends a striking abnormality signal to the processor. If the striking efficiency is greater than the striking threshold, it is determined that the striking efficiency is qualified, and the striking monitoring module sends a normal striking signal to the processor.

### Embodiment 3

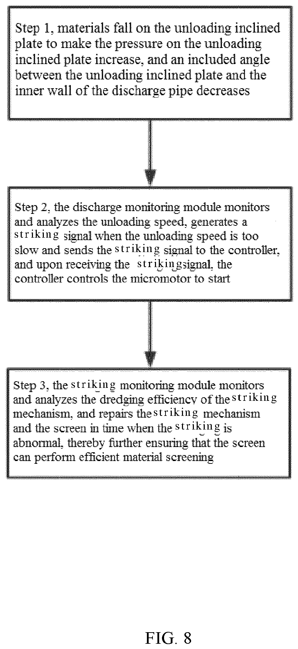

Referring to FIG. 8. a discharge process of a type of nano-sand mill with static discharge at the tail end of a turbine includes the following steps.

In step 1, materials in the main body 1 enter into the screen box 2 through the discharge chamber 13, the ground materials are screened by the screen 16 and then fall on the unloading inclined plate 18 to make the pressure on the unloading inclined plate 18 increase, and an included angle between the unloading inclined plate 18 and the inner wall of the discharge pipe 17 decreases.

In step 2, the discharge monitoring module monitors and analyzes the unloading speed through the angle value of the included angle between the unloading inclined plate 18 and the inner wall of the discharge pipe 17, and generates a striking signal when the unloading speed is too slow and sends the striking signal to the controller. Upon receiving the striking signal, the controller controls the micromotor 308 to start. The micromotor 308 drives the two rotating shafts 303 to rotate synchronously and in opposite directions through the two transmission gears 307. The two rotating rollers 304 also synchronously rotate in opposite directions. The protruding rod 310 reciprocates in the vertical direction through the rotating bumps 306, and the movement trajectories of the plurality of protruding rods 310 are different, such that the plurality of striking marbles 313 continuously strike the screen 16, so as to strike the blocked screen 16 to ensure the screening efficiency of the screen 16.

In step 3, the striking monitoring module monitors and analyzes the striking efficiency of the striking mechanism 3, and repairs the striking mechanism 3 and the screen 16 in time when the striking is abnormal, thereby further ensuring that the screen 16 can perform efficient material screening.

The above formulas are obtained by collecting a large amount of data for software simulation and a formula that is close to real values is selected. The coefficients in the formula are set by those skilled in the art according to the actual situation, such as formula CL=α1×YL+α2+×ZS. Those skilled in the art collect a plurality of groups of sample data and sets a corresponding discharge coefficient for each group of sample data, substitute the set discharge coefficient and the collected sample data into the formula, with any two formulas forming a binary linear equation system, and sort the calculated coefficients and average the same to obtain the values of α1 and α2 being 3.78 and 2.37, respectively.

The size of the coefficient is a specific value obtained by quantifying each parameter, which is convenient for subsequent comparison. The size of the coefficient depends on the amount of sample data and the corresponding discharge coefficients preliminarily set for each group of sample data by those skilled in the art, as long as it does not affect a proportional relationship between the parameter and the quantized value. For example, the discharge coefficient is proportional to the pressure value.

When the present application is in use, the discharge monitoring module monitors the discharge speed of the screen 16 in real time, feeds back the unloading speed through the inclination angle of the unloading inclined plate 18, and analyzes the state of the screen 16 by different analysis methods when the unloading speed is too fast or the unloading speed is too slow, which can monitor the blockage of the screen 16 in real time and strike the screen 16 at the first time when the screen 16 is blocked. When the screen 16 is blocked, the micromotor 308 is started to make the plurality of striking marbles 313 continuously strike the screen 16 to quickly strike the screen 16, shaking out the materials blocked on the screen 16, and at the same time the surfaces of the striking marbles 313 grind the materials on the lower surface of the screen 16.

The above-disclosed preferred embodiments of the present application are provided only to help illustrate the present application. The preferred embodiments do not describe all the details and do not limit the present application to specific embodiments. Obviously, many modifications and variations are possible in light of the content of this specification. This specification selects and specifically describes these embodiments in order to better explain the principles and practical applications of the present application, such that those skilled in the art can well understand and utilize the present application. The present application is to be limited only by the claims.

## Claims

1. A nano-sand mill with static discharge at the tail end of a turbine, comprising a main body (1) and a screen box (2), wherein the screen box (2) is fixedly installed at a bottom of the main body (1), a top surface of the screen box (2) is provided with a through hole (14), the screen box (2) is communicated with a discharge chamber (13) of the main body (1) through the through hole (14), an annular mounting plate (15) is fixedly installed on an inner side surface of the screen box (2), a screen (16) is fixedly installed between inner side surfaces of the annular mounting plate (15), and a striking mechanism (3) is provided inside the annular mounting plate (15); and
the striking mechanism (3) comprises a striking box (301), a side surface of the striking box (301) is fixedly connected with a connecting frame, two symmetrical rotating shafts (303) are movably connected between a front inner wall and a back inner wall of the striking box (301), a rotating roller (304) is fixedly installed on an outer surface of the rotating shaft (303), evenly distributed installation sleeves (305) are fixedly installed on an outer surface of the rotating roller (304), evenly distributed bumps (306) are fixedly installed on an outer surface of the installation sleeve (305), a drive box (302) for driving the two rotating shafts (303) is fixedly installed on a front surface of the striking box (301), two sets of symmetrical limit sleeves (309) penetrate and are fixedly connected with an inner top wall of the striking box (301), a protruding rod (310) is movably connected between inner rings of the limit sleeve (309), a connecting block (311) is fixedly installed on a bottom of the protruding rod (310), a bottom of the connecting block (311) is in contact with a top surface of the bump (306), a second spring (312) is fixedly installed between a top surface of the connecting block (311) and the inner top wall of the striking box (301), and a striking marble (313) is fixedly installed on a top of the protruding rod (310).

2. The nano-sand mill with static discharge at the tail end of a turbine according to claim 1, wherein a discharge pipe (17) is fixedly installed on the screen box (2), a bottom of the screen box (2) is communicated with a top of the discharge pipe (17), the discharge pipe (17) is arranged horizontally, one end of the discharge pipe (17) is sealed, a material pump is arranged between inner walls of the other end of the discharge pipe (17), an inner bottom wall of the discharge pipe (17) is hinged with an unloading inclined plate (18), and a first spring (19) is fixedly installed between a bottom surface of the unloading inclined plate (18) and the inner bottom wall of the discharge pipe (17).

3. The nano-sand mill with static discharge at the tail end of a turbine according to claim 1, wherein front ends of the two rotating shafts (303) both pass through the inner wall of the striking box (301) and extend to the interior of the drive box (302), a transmission gear (307) is fixedly installed on outer surfaces of ends of the two rotating shafts (303) located inside the drive box (302), the two transmission gears (307) are engaged with each other, a micromotor (308) is fixedly installed on a front inner wall of the drive box (302) through two motor seats, and an output end of the micromotor (308) is fixedly connected to the front end of one of the rotating shafts (303).

4. The nano-sand mill with static discharge at the tail end of a turbine according to claim 1, wherein a processor is also provided on an outer grinding cylinder (4), and the processor is communicatively connected with a discharge monitoring module, an abnormality analysis module, a storage module, a controller, and a striking monitoring module;
the discharge monitoring module is adapted to monitor and analyze a discharge speed of the main body (1) in the following way:
an angle value of an included angle between the unloading inclined plate (18) and the inner bottom wall of the discharge pipe (17) is obtained through an angle sensor and marked as an included angle value JD, included angle thresholds JDmin and JDmax are obtained through the storage module, where JDmin is the minimum included angle threshold and JDmax is the maximum included angle threshold, and the included angle value JD is compared with the included angle thresholds JDmin and JDmax: if JD≤JDmin, it is determined that the discharge is abnormal, and the discharge monitoring module sends a primary abnormality signal to the abnormality analysis module; if JDmin<JD<JDmax, it is determined that the discharge is normal, and the discharge monitoring module sends a normal discharge signal to the processor; and if JD≥JDmax, it is determined that the discharge is abnormal, and the discharge monitoring module sends a secondary abnormality signal to the abnormality analysis module.

5. The nano-sand mill with static discharge at the tail end of a turbine according to claim 4, adapted to execute the following steps: upon receiving the primary abnormality signal, the abnormality analysis module generates a maintenance signal and sends the maintenance signal to the processor, upon receiving the maintenance signal, the processor sends the maintenance signal to a mobile phone terminal of an administrator, to enable the administrator, upon receiving the maintenance signal, to check the screen (16) and the unloading inclined plate (18) for faults respectively; and
upon receiving the secondary abnormality signal, the abnormality analysis module detects and analyzes blockage of the screen (16), and sends a striking signal to the processor when the screen (16) is blocked, upon receiving the striking signal, the processor sends the striking signal to the controller, and upon receiving the striking signal, the controller controls the micromotor (308) to start.

6. The nano-sand mill with static discharge at the tail end of a turbine according to claim 5, adapted to conduct a specific process of detecting and analyzing the blockage of the screen (16) comprising the following steps:
a pressure value of an inner wall of the discharge chamber (13) is obtained through a pressure sensor disposed on the inner wall of the discharge chamber (13) and marked as YL, a speed value of a spindle (6) is obtained through a speed sensor and marked as ZS, and a discharge coefficient CL is obtained by calculating YL and ZS; and a discharge threshold CLmin is obtained through the storage module, and the discharge coefficient CL is compared with the discharge threshold CLmin: if the discharge coefficient CL is less than or equal to the discharge threshold CLmin, it is determined that the screen (16) is not blocked, and the abnormality analysis module sends a normal discharge signal to the processor; and if the discharge coefficient CL is greater than the discharge threshold CLmin, it is determined that the screen (16) is blocked.

7. The nano-sand mill with static discharge at the tail end of a turbine according to claim 5, wherein the striking monitoring module is adapted to monitor and analyze a striking efficiency of the striking mechanism (3) in the following way:
time-keeping is performed after the micromotor (308) is started, a time when the micromotor (308) is started is marked as a start time, a time when the included angle value JD is reduced to the included angle threshold JDmax is marked as an end time, the start time is subtracted from the end time to obtain a striking duration, a difference value between the included angle value JD and the angle threshold JDmax is marked as an angle difference value, a ratio of the angle difference value and the striking duration is marked as a striking efficiency, a striking threshold is obtained through the storage module, and the striking efficiency is compared with the striking threshold: if the striking efficiency is less than or equal to the striking threshold, it is determined that the striking efficiency is unqualified, and the striking monitoring module sends a striking abnormality signal to the processor; and if the striking efficiency is greater than the striking threshold, it is determined that the striking efficiency is qualified, and the striking monitoring module sends a normal striking signal to the processor.

## Patentansprüche

1. Nanosandmühle mit statischem Austrag an dem hinteren Ende einer Turbine, umfassend einen Hauptkörper (1) und einen Siebkasten (2), wobei der Siebkasten (2) fest an einem Boden des Hauptkörpers (1) installiert ist, eine obere Oberfläche des Siebkastens (2) mit einem Durchgangsloch (14) versehen ist, der Siebkasten (2) mit einer Austragkammer (13) des Hauptkörpers (1) durch das Durchgangsloch (14) in Verbindung steht, eine ringförmige Montageplatte (15) fix an einer inneren Seitenoberfläche des Siebkastens (2) installiert ist, ein Sieb (16) fix zwischen inneren Seitenflächen der ringförmigen Montageplatte (15) installiert ist, und ein Schlagmechanismus (3) innerhalb der ringförmigen Montageplatte (15) bereitgestellt ist; und
der Schlagmechanismus (3) einen Schlagkasten (301) umfasst, eine Seitenoberfläche des Schlagkastens (301) fest mit einem Verbindungsrahmen verbunden ist, zwei symmetrische Drehwellen (303) bewegbar zwischen einer vorderen Innenwand und einer hinteren Innenwand des Schlagkastens (301) verbunden sind, eine Drehwalze (304) fest an einer Außenoberfläche der Drehwelle (303) installiert ist, gleichmäßig verteilte Installationshülsen (305) fest an einer Außenfläche der Drehwalze (304) installiert sind, gleichmäßig verteilte Höcker (306) fest an einer Außenoberfläche der Installationshülse (305) installiert sind, ein Antriebskasten (302) zum Antreiben der beiden Drehwellen (303) fest an einer Vorderoberfläche des Schlagkastens (301) installiert ist, zwei Sätze von symmetrischen Begrenzungshülsen (309) eine innere obere Wand des Schlagkastens (301) durchdringen und mit dieser fest verbunden sind, eine vorragende Stange (310) bewegbar zwischen inneren Ringen der Begrenzungshülse (309) verbunden ist, ein Verbindungsblock (311) fest an einem Boden der vorragenden Stange (310) installiert ist, ein Boden des Verbindungsblocks (311) in Kontakt mit einer oberen Oberfläche des Höckers (306) steht, eine zweite Feder (312) fest zwischen einer oberen Oberfläche des Verbindungsblocks (311) und der inneren oberen Wand des Schlagkastens (301) installiert ist, und eine Schlagkugel (313) fest an einer Oberseite der vorragenden Stange (310) installiert ist.

2. Nanosandmühle mit statischem Austrag an dem hinteren Ende einer Turbine nach Anspruch 1, wobei ein Austragrohr (17) fest an dem Siebkasten (2) installiert ist, ein Boden des Siebkastens (2) mit einer Oberseite des Austragrohrs (17) in Verbindung steht, das Austragrohr (17) horizontal eingerichtet ist, ein Ende des Austragrohrs (17) abgedichtet ist, eine Materialpumpe zwischen Innenwänden des anderen Endes des Austragrohrs (17) eingerichtet ist, eine innere Bodenwand des Austragrohrs (17) an eine schräge Entladeplatte (18) scharnierartig angelenkt ist, und eine erste Feder (19) fest zwischen einer Bodenoberfläche der schrägen Entladeplatte (18) und der inneren Bodenwand des Austragrohrs (17) installiert ist.

3. Nanosandmühle mit statischem Austrag an dem hinteren Ende einer Turbine nach Anspruch 1, wobei Vorderenden der zwei Drehwellen (303) beide durch die Innenwand des Schlagkastens (301) durchgehen und sich zu dem Inneren des Antriebskastens (302) erstrecken, ein Übertragungszahnrad (307) fix an einer Außenoberfläche von Enden der zwei Drehwellen (303), die sich innerhalb des Antriebskastens (302) befinden, installiert ist, die zwei Übertragungszahnräder (307) ineinander eingreifen, ein Mikromotor (308) fix an einer vorderen Innenwand des Antriebskastens (302) durch zwei Motorsitze installiert ist, und ein Ausgangsende des Mikromotors (308) fix mit dem Vorderende einer der Drehwellen (303) verbunden ist.

4. Nanosandmühle mit statischem Austrag an dem hinteren Ende einer Turbine nach Anspruch 1, wobei auch ein Prozessor an einem äußeren Schleifzylinder (4) bereitgestellt ist, und der Prozessor kommunikationsfähig mit einem Austragüberwachungsmodul, einem Anormalitätsanalysemodul, einem Speichermodul, einer Steuervorrichtung und einem Schlagüberwachungsmodul verbunden ist;
das Austragüberwachungsmodul angepasst ist, um eine Austraggeschwindigkeit des Hauptkörpers (1) in der folgenden Weise zu überwachen und analysieren:
ein Winkelwert eines zwischen der schrägen Entladeplatte (18) und der inneren Bodenwand des Austragrohrs (17) eingeschlossenen Winkels wird durch einen Winkelsensor erhalten und als ein eingeschlossener Winkelwert JD markiert, eingeschlossene Winkelschwellenwerte JDmin und JDmax werden durch das Speichermodul erhalten, wobei JDmin der Mindestschwellenwert des eingeschlossenen Winkels ist und JDmax der Höchstschwellenwert des eingeschlossenen Winkels ist, und der Wert des eingeschlossenen Winkels JD mit den Schwellenwerten der eingeschlossenen Winkel JDmin und JDmax verglichen wird: falls JD ≤ JDmin, wird bestimmt, dass der Austrag anormal ist, und das Austragüberwachungsmodul sendet ein Hauptanormalitätsignal an das Anormalitätsanalysemodul; falls JDmin<JD<JDmax, wird bestimmt, dass der Austrag normal ist, und das Austragüberwachungsmodul sendet ein Signal für normalen Austrag an den Prozessor; und falls JD ≥ JDmax, wird bestimmt, dass der Austrag anormal ist, und das Austragüberwachungsmodul sendet ein Sekundäranormalitätssignal an das Anormalitätsanalysemodul.

5. Nanosandmühle mit statischem Austrag an dem hinteren Ende einer Turbine nach Anspruch 4, die angepasst ist, um die folgenden Schritte auszuführen:
bei Empfangen des Hauptanormalitätsignals erzeugt das Anormalitätsanalysemodul ein Wartungssignal und sendet das Wartungssignal an den Prozessor, bei Empfangen des Wartungssignals sendet der Prozessor ein Wartungssignal an ein Mobiltelefonendgerät eines Administrators, um es dem Administrators zu ermöglichen, bei Empfangen des Wartungssignals das Sieb (16) bzw. die schräge Entladeplatte (18) auf Mängel zu überprüfen; und
bei Empfangen des Sekundäranormalitätssignals erfasst und analysiert das Anormalitätsanalysemodul das Blockieren des Siebs (16) und sendet ein Schlagsignal an den Prozessor, wenn das Sieb (16) blockiert ist, bei Empfangen des Schlagsignals sendet der Prozessor das Schlagsignal an die Steuervorrichtung, und bei Empfangen des Schlagsignals steuert die Steuervorrichtung den Mikromotor (308) zum Starten an.

6. Nanosandmühle mit statischem Austrag an dem hinteren Ende einer Turbine nach Anspruch 5, die angepasst ist, um einen spezifischen Prozess zum Erfassen und Analysieren der Blockierung des Siebs (16) zu führen, der die folgenden Schritte umfasst:
ein Druckwert einer Innenwand der Austragkammer (13) wird durch einen Drucksensor erhalten, der an der Innenwand der Austragkammer (13) angeordnet ist und wird als YL markiert, ein Drehzahlwert einer Spindel (6) wird durch einen Drehzahlsensor erhalten und als ZS markiert, und ein Austragkoeffizient CL wird durch Berechnen von YL und ZS erhalten; und ein Austragschwellenwert CLmin wird durch das Speichermodul erhalten, und der Austragkoeffizient CL wird mit dem Austragschwellenwert CLmin verglichen: falls der Austragkoeffizient CL kleiner oder gleich dem Austragschwellenwert CLmin ist, wird bestimmt, dass das Sieb (16) nicht blockiert ist, und das Anormalitätsanalysemodul sendet ein normales Austragsignal an den Prozessor; und falls der Austragkoeffizient CL größer ist als der Austragschwellenwert CLmin, wird bestimmt, dass das Sieb (16) blockiert ist.

7. Nanosandmühle mit statischem Austrag an dem hinteren Ende einer Turbine nach Anspruch 5, wobei das Schlagüberwachungsmodul dazu angepasst ist, eine Schlageffizienz des Schlagmechanismus (3) in der folgenden Weise zu überwachen und analysieren:
Zeitzählung wird durchgeführt, nachdem der Mikromotor (308) gestartet ist, eine Zeit, zu der der Mikromotor (308) gestartet wird, wird als eine Startzeit markiert, eine Zeit, wenn der Wert des eingeschlossenen Winkels JD auf den Schwellenwert des eingeschlossenen Winkels JDmax reduziert ist, wird als eine Endzeit markiert, die Startzeit wird von der Endzeit abgezogen, um eine Schlagdauer zu erhalten, ein Differenzwert zwischen dem Wert des eingeschlossenen Winkels JD und dem Winkelschwellenwert JDmax wird als ein Winkeldifferenzwert markiert, ein Verhältnis des Winkeldifferenzwerts und der Schlagdauer wird als eine Schlageffizienz markiert, ein Schlagschwellenwert wird durch das Speichermodul erhalten, und die Schlageffizienz wird mit dem Schlagschwellenwert verglichen: falls die Schlageffizienz geringer oder gleich dem Schlagschwellenwert ist, wird bestimmt, dass die Schlageffizienz nicht qualifiziert ist, und das Schlagüberwachungsmodul sendet ein Schlaganormalitätssignal an den Prozessor; und falls die Schlageffizienz größer ist als der Schlagschwellenwert, wird bestimmt, dass die Schlageffizienz qualifiziert ist, und das Schlagüberwachungsmodul sendet ein normales Schlagsignal an den Prozessor.

## Revendications

1. Broyeur à nano-sable avec décharge statique à l'extrémité avale d'une turbine, comprenant un corps principal (1) et une boîte à tamis (2), dans lequel la boîte à tamis (2) est installée de manière fixe au niveau d'un fond du corps principal (1), une surface supérieure de la boîte à tamis (2) est pourvue d'un trou traversant (14), la boîte à tamis (2) est en communication avec une chambre de décharge (13) du corps principal (1) à travers le trou traversant (14), une plaque de montage annulaire (15) est installée de manière fixe sur une surface latérale interne de la boîte à tamis (2), un tamis (16) est installé de manière fixe entre des surfaces latérales internes de la plaque de montage annulaire (15), et un mécanisme de percussion (3) est prévu à l'intérieur de la plaque de montage annulaire (15) ; et
le mécanisme de percussion (3) comprend une boîte de percussion (301), une surface latérale de la boîte de percussion (301) est reliée de manière fixe à un cadre de liaison, deux arbres rotatifs symétriques (303) sont reliés de façon mobile entre une paroi interne avant et une paroi interne arrière de la boîte de percussion (301), un rouleau rotatif (304) est installé de manière fixe sur une surface externe de l'arbre rotatif (303), des manchons d'installation (305) répartis de manière uniforme sont installés de manière fixe sur une surface externe du rouleau rotatif (304), des bosses (306) réparties de manière uniforme sont installées de manière fixe sur une surface externe du manchon d'installation (305), une boîte d'entraînement (302) pour entraîner les deux arbres rotatifs (303) est installée de manière fixe sur une surface avant de la boîte de percussion (301), deux ensembles de manchons de limite symétriques (309) pénètrent et sont reliés de manière fixe à une paroi supérieure interne de la boîte de percussion (301), une tige en saillie (310) est reliée de façon mobile entre des anneaux internes du manchon de limite (309), un bloc de liaison (311) est installé de manière fixe sur un fond de la tige en saillie (310), un fond du bloc de liaison (311) est en contact avec une surface supérieure de la bosse (306), un deuxième ressort (312) est installé de manière fixe entre une surface supérieure du bloc de liaison (311) et la paroi supérieure interne de la boîte de percussion (301), et une bille de percussion (313) est installée de manière fixe sur une partie haute de la tige en saillie (310).

2. Broyeur à nano-sable avec décharge statique à l'extrémité avale d'une turbine selon la revendication 1, dans lequel une conduite de décharge (17) est installée de manière fixe sur la boîte à tamis (2), un fond de la boîte à tamis (2) est en communication avec une partie haute de la conduite de décharge (17), la conduite de décharge (17) est disposée horizontalement, une extrémité de la conduite de décharge (17) est scellée, une pompe à matériau est disposée entre des parois internes de l'autre extrémité de la conduite de décharge (17), une paroi inférieure interne de la conduite de décharge (17) est connectée de manière articulée avec une plaque inclinée de déchargement (18), et un premier ressort (19) est installé de manière fixe entre une surface inférieure de la plaque inclinée de déchargement (18) et la paroi inférieure interne de la conduite de décharge (17).

3. Broyeur à nano-sable avec décharge statique à l'extrémité avale d'une turbine selon la revendication 1, dans lequel des extrémités avant des deux arbres rotatifs (303) passent toutes les deux à travers la paroi interne de la boîte de percussion (301) et s'étendent jusqu'à la l'intérieur de la boîte d'entraînement (302), un engrenage de transmission (307) est installé de manière fixe sur des surfaces externes des extrémités des deux arbres rotatifs (303) situées à l'intérieur de la boîte d'entraînement (302), les deux engrenages de transmission (307) sont en prise l'un avec l'autre, un micro-moteur (308) est installé de manière fixe sur une paroi interne avant de la boîte d'entraînement (302) à travers deux sièges de moteur, et une extrémité de sortie du micro-moteur (308) est reliée de manière fixe à l'extrémité avant de l'un des arbres rotatifs (303).

4. Broyeur à nano-sable avec décharge statique à l'extrémité avale d'une turbine selon la revendication 1, dans lequel un processeur est également prévu sur un cylindre de broyage externe (4), et le processeur est connecté en communication avec un module de surveillance de décharge, un module d'analyse d'anomalie, un module de stockage, une unité de contrôle et un module de surveillance de percussion ;
le module de surveillance de décharge est adapté pour surveiller et analyser une vitesse de décharge du corps principal (1) de la façon suivante :
une valeur d'angle d'un angle inclus entre la plaque inclinée de déchargement (18) et la paroi inférieure interne de la conduite de décharge (17) est obtenue au moyen d'un capteur d'angle et marquée comme une valeur d'angle inclus JD, des seuils d'angle inclus JDmin et JDmax sont obtenus au moyen du module de stockage, où JDmin est le seuil d'angle inclus minimal et JDmax est le seuil d'angle inclus maximal, et la valeur d'angle inclus JD est comparée aux seuils d'angle inclus JDmin et JDmax : si JD ≤ JDmin, il est déterminé que la décharge est anormale, et le module de surveillance de décharge envoie un signal d'anomalie primaire au module d'analyse d'anomalie ; si JDmin<JD<JDmax, il est déterminé que la décharge est normale, et le module de surveillance de décharge envoie un signal de décharge normale au processeur ; et si JD ≥ JDmax, il est déterminé que la décharge est anormale, et le module de surveillance de décharge envoie un signal d'anomalie secondaire au module d'analyse d'anomalie.

5. Broyeur à nano-sable avec décharge statique à l'extrémité avale d'une turbine selon la revendication 4, adapté pour exécuter les étapes suivantes :
à la réception du signal d'anomalie primaire, le module d'analyse d'anomalie génère un signal de maintenance et envoie le signal de maintenance au processeur, à la réception du signal de maintenance, le processeur envoie le signal de maintenance à un terminal téléphonique mobile d'un administrateur, pour permettre à l'administrateur, à la réception du signal de maintenance, de contrôler respectivement le tamis (16) et la plaque inclinée de déchargement (18) pour la présence de défauts; et
à la réception du signal d'anomalie secondaire, le module d'analyse d'anomalie détecte et analyse un blocage du tamis (16), et envoie un signal de percussion au processeur lorsque le tamis (16) est bloqué, à la réception du signal de percussion, le processeur envoie le signal de percussion à l'unité de contrôle, et à la réception du signal de percussion, l'unité de contrôle commande le démarrage du micro-moteur (308).

6. Broyeur à nano-sable avec décharge statique à l'extrémité avale d'une turbine selon la revendication 5, adapté pour effectuer un processus spécifique de détection et d'analyse du blocage du tamis (16) comprenant les étapes suivantes :
une valeur de pression d'une paroi interne de la chambre de décharge (13) est obtenue au moyen d'un capteur de pression disposé sur la paroi interne de la chambre de décharge (13) et marquée YL, une valeur de vitesse d'une broche (6) est obtenue au moyen d'un capteur de vitesse et marquée ZS, et un coefficient de décharge CL est obtenu en calculant YL et ZS ; et un seuil de décharge CLmin est obtenu au moyen du module de stockage, et le coefficient de décharge CL est comparé au seuil de décharge CLmin : si le coefficient de décharge CL est inférieur ou égal au seuil de décharge CLmin, il est déterminé que le tamis (16) n'est pas bloqué, et le module d'analyse d'anomalie envoie un signal de décharge normal au processeur ; et si le coefficient de décharge CL est supérieur au seuil de décharge CLmin, il est déterminé que le tamis (16) est bloqué.

7. Broyeur à nano-sable avec décharge statique à l'extrémité avale d'une turbine selon la revendication 5, dans lequel le module de surveillance de percussion est destiné à surveiller et à analyser une efficacité de percussion du mécanisme de percussion (3) de la façon suivante :
un chronométrage est effectué après le démarrage du micro-moteur (308), un instant où le micro-moteur (308) est démarré est marqué comme instant de début, un instant où la valeur d'angle inclus JD est réduite au seuil d'angle inclus JDmax est marqué comme instant de fin, l'instant de début est soustrait de l'instant de fin pour obtenir une durée de percussion, une valeur de différence entre la valeur d'angle inclus JD et le seuil d'angle JDmax est marquée comme une valeur de différence d'angle, un rapport de la valeur de différence d'angle et de la durée de percussion est marqué comme efficacité de percussion, un seuil de percussion est obtenu à travers le module de stockage, et l'efficacité de percussion est comparée au seuil de percussion : si l'efficacité de percussion est inférieure ou égale au seuil de percussion, il est déterminé que l'efficacité de percussion est non qualifiée, et le module de surveillance de percussion envoie un signal d'anomalie de percussion au processeur ; et si l'efficacité de percussion est supérieure au seuil de percussion, il est déterminé que l'efficacité de percussion est qualifiée, et le module de surveillance de percussion envoie un signal de percussion normale au processeur.
